**Europäisches Patentamt**

(19) **European Patent Office**

**Office européen des brevets**

(11) Veröffentlichungsnummer: **0 121 699**
**B1**

(12) # EUROPÄISCHE PATENTSCHRIFT

(45) Veröffentlichungstag der Patentschrift:
**22.04.87**

(21) Anmeldenummer: **84101715.5**

(22) Anmeldetag: **20.02.84**

(51) Int. Cl.⁴: **C 08 L 101/00,** C 08 L 21/00,
C 08 L 63/08, C 08 G 59/34 //
(C08L101/00, 63:08),(C08L21/00,
63:08),(C08L63/08,
101:00),(C08L63/08, 21:00)

(54) Herstellung und Verwendung vernetzter, epoxidierter fetter Öle.

(30) Priorität: **03.03.83 DE 3307421**

(43) Veröffentlichungstag der Anmeldung:
**17.10.84 Patentblatt 84/42**

(45) Bekanntmachung des Hinweises auf die Patenterteilung:
**22.04.87 Patentblatt 87/17**

(84) Benannte Vertragsstaaten:
**AT BE CH DE FR GB IT LI LU NL SE**

(56) Entgegenhaltungen:
**DE - B - 1 046 876**
**US - A - 3 042 687**

**PATENTS ABSTRACTS OF JAPAN, Band 5, Nr.
89(C-58)(761), 10. Juni 1981; & JP - A - 56 34735 (NIPPON
GOSEI GOMU K.K.) 07.04.1981**

(73) Patentinhaber: **RHEIN-CHEMIE RHEINAU GMBH,
Postfach 81 04 09 Mülheimer Strasse 24-28,
D-6800 Mannheim 81 (DE)**

(72) Erfinder: **Bauer, Armin, Dr., Neulussheimer Weg 9,
D6831 Brühl (DE)**
Erfinder: **Ehrend, Helfried, Leharstrasse 12,
D-6720 Speyer (DE)**
Erfinder: **Morche, Klaus, Dr., Viktoriastrasse 12,
D-6800 Mannheim 1 (DE)**
Erfinder: **Nützel, Karl, Dr., Kornstrasse 23,
D-6831 Neulussheim (DE)**
Erfinder: **Sauerbier, Michael, Dr., Promenadeweg 36,
D-6831 Brühl-Rohrhof (DE)**

(74) Vertreter: **Jochum, Axel et al, c/o BAYER AG
Zentralbereich Patente, Marken und Lizenzen,
D-5090 Leverkusen 1, Bayerwerk (DE)**

# Beschreibung

Hochmolekularen Stoffen wie Elastomeren, Thermoplasten und Duromeren werden die verschiedenartigsten Additive wie Antioxidantien, Lichtschutzmittel, Stabilisatoren, Verarbeitungshilfsmittel, Gleitmittel, Weichmacher, Flammschutzmittel, Antistatika, Pigmente oder eine geeignete Auswahl aus den genannten Zusatzstoffen zugesetzt.

Es ist im Laufe der Entwicklung gelungen, viele Wirkstoffe zu finden, die gleichzeitig mehrere an einen Hilfsstoff gestellte Anforderungen erfüllen. So besitzen viele Gleitmittel die Eigenschaft, sowohl als «inneres» als auch als «äusseres» Gleitmittel zu wirken. Das bedeutet, dass einerseits Viskositätsabsenkung bei der Verarbeitung des Elastomers oder Polymers erreicht wird, andererseits durch Bildung eines Gleitmittelfilms auf der Fertigteil-Oberfläche die Entformung der Fertigteile begünstigt wird.

Ein Zusatzstoff, der vorzugsweise in Elastomeren eingesetzt wird und in erster Linie als Verarbeitungshilfsmittel dient, ist der «Faktis». Faktis ist ein Polymerisationsprodukt aus ungesättigten pflanzlichen und gegebenenfalls tierischen, fetten Ölen, wie Rüböl, Leinöl, Sojaöl oder Fischöl. Die fetten Öle werden entweder bei 120–170 °C mit 5 bis 20% Schwefel oder bei 20–70 °C mit Dischwefeldichlorid umgesetzt.

In beiden Fällen entstehen durch intra- und intermolekulare Schwefelbrücken vernetzte höhermolekulare, elastische Stoffe, die mit geringem Aufwand zerkleinert bzw. gemahlen werden können.

In der Kautschucktechnologie wird der Faktis als Verarbeitungshilfsmittel mit einem breiten Spektrum wichtiger Eigenschaften eingesetzt. So besitzt Faktis füllstoffdispergierende und weichmachende Eigenschaften bei der Herstellung der Kautschukmischung und verbessert deren Verarbeitung im Extruder. Darüber hinaus ist die Masshaltigkeit und Standfestigkeit faktishaltiger unvulkanisierter Profile – auch bei den bei der Vulkanisation herrschenden Temperaturen – eine zur Herstellung komplizierter Gummiteile äusserst vorteilhafte Eigenschaft.

Nachteilig ist, dass Zugfestigkeitswerte und Spannungswerte der Vulkanisate durch den Einsatz von Faktis dosierungsabhängig gemindert werden.

Weiterhin ist nachteilig, dass Faktis aufgrund seiner durch die Schwefelbrücken bedingten begrenzten Temperaturbeständigkeit von 160–190 °C bei dem unverkennbaren Trend zu höheren Vulkanisationstemperaturen an Einsatzmöglichkeiten verliert, weil die Faktisse sich zersetzen und die öligen Zersetzungsprodukte die Gummioberflächen und beispielsweise die Salzbäder, in denen vulkanisiert wird, verunreinigen. Diese Zersetzungsprodukte bedeuten zudem eine Brandgefahr.

Es hat nicht an Versuchen gefehlt, die genannten Nachteile des schwefelvernetzten Faktis durch die Entwicklung geeigneterer Ersatzprodukte zu überwinden. So wurden Versuche unternommen, ungesättigte oder OH-Gruppenhaltige Triglyceride auf anderen Wegen zu polymerisieren. Beispielsweise wurden durch Sauerstoff- oder Lufteinleitung in erhitzte fette Öle sauerstoffvernetzte Triglyceride erhalten. Die Herstellung dieser faktisartigen Produkte ist jedoch nicht reproduzierbar. Weiterhin wurden OH-Gruppenhaltige Trigliceride wie Ricinusöl mit Stoffen wie SiCl$_4$, PCl$_3$ oder POCl$_3$ vernetzt. Die dabei erhaltenen Produkte sind jedoch weder hydrolysestabil, noch ist die grosse Menge entstehenden Chlorwasserstoffs einfach abzutrennen.

Auch wurde die Vernetzung von OH-Gruppenhaltigen Triglyceriden wie Ricinusöl mit mehrfunktionellen Isocyanaten versucht. Die dabei gewonnenen sogenannten Isocyanat-Faktisse zeigten eine nicht ausreichende thermische Beständigkeit und daher ein ungünstiges Verhalten bei hohen Vulkanisationstemperaturen.

Aufgabe der vorliegenden Erfindung war es, nach faktisähnlichen Verbindungen zu suchen, die beim Einsatz in Elastomeren auch bei höheren Vulkanisationstemperaturen die Masshaltigkeit und Standfestigkeit unvulkanisierter Profile gewährleisten.

Es wurde nun gefunden, dass sich die Aufgabe mit epoxidierten und anschliessend vernetzten Estern aus mindestens zweiwertigen, vorzugsweise mindestens dreiwertigen Alkoholen und ungesättigten Fettsäuren insbesondere den Glyceriden solcher Fettsäuren lösen lässt.

Gegenstand der Erfindung ist daher die Verwendung epoxidierter und anschliessend mit Polycarbonsäuren, Polyaminen, Polyhydroxyverbindungen, Polythiolverbindungen und Verbindungen, die unterschiedliche Vernetzungsgruppen aus der Reihe Carboxy, Amino, Hydroxy und Thiol enthalten, vernetzter Ester aus mindestens zweiwertigen, vorzugsweise mindestens dreiwertigen Alkoholen und ungesättigten Fettsäuren, insbesondere natürlicher Triglyceride ungesättigter Fettsäuren, als Verarbeitungswirkstoff in Polymeren, insbesondere in Elastomeren.

Die epoxidierten und anschliessend vernetzten Ester werden erhalten, indem man sie zunächst epoxidiert und anschliessend mit den vorstehend genannten, mit Epoxid-Gruppen reagierenden mehrfunktionellen Vernetzungsmitteln vernetzt. Geeignete Di- oder Polycarbonsäuren sind z.B. Bernsteinsäure, Phthalsäure, Tere- und Isoptthalsäure und Trimellithsäure. Geeignete Polyamine sind z.B. Ethylendiamin, Diethylentriamin, Hexamethylendiamin und Phenylendiamine. Geeignete Polyhydroxyverbindungen sind z.B. Glycerin, Glykol, Diglykol, Pentaerythrit, Hydrochinon, Pyrogallol, und mit Polyalkoholen veresterte Hydroxycarbonsäuren. Geeignete Polythiolverbindungen sind z.B. Ethanithiol-1,2, Tri-methylolpropan- tri-3- mercaptopropionat, Pentaerythrittetra-3-mercaptopropionat und Dithiophosphorsäuren. Geeignete Vernetzungsmittel können auch verschiedene funktionelle Gruppen in einem Molekül enthalten.

Geeignete, mindestens zweiwertige, vorzugsweise dreiwertige Alkohole sind z.B. Glycerin, Glykol, Pentaerythrit, Trimethylolpropan und/ oder Sorbit. Bevorzugte Ester sind die natürlichen Trigliceride ungesättigter Fettsäuren, die sogenannten fetten Öle, beispielsweise Rüböl, Leinöl, Sojaöl und Fischöl. Bei Verwendung von zweiwertigen Alkoholen werden vorzugsweise mindestens trifunktionelle Vernetzungsmittel eingesetzt.

Die Vernetzungsmittel werden mit den epoxidierten fetten Öle, die Epoxidgehalte von 1,5 bis 15 Gew.-% (Gew.-% Sauerstoff bezogen auf epoxidiertes fettes Öl), vorzugsweise 4 bis 8 Gew.-%, aufweisen, in Dosierungen von 3 bis 50 Gew.-% bei Temperaturen von 80 bis 180 °C, vorzugsweise bei 100 bis 150 °C, zur Reaktion gebracht, wobei feste und halbfeste Polymere erhalten werden.

Die Dosierung des Vernetzungsmittels wird so bemessen, dass auf eine Epoxidgruppe etwa eine vernetzungsfähige Gruppe des Vernetzungsmittels kommt.

Bei nicht vollständiger stöchiometrischer Umsetzung soll das Vernetzungsprodukt vorzugsweise noch Epoxidgruppen enthalten.

Bevorzugte Vernetzungsmittel sind Dicarbonsäuren.

Die vernetzten Produkte werden den Polymeren, insbesondere den Elastomeren in Mengen von 3 bis 400 Gew.-%, bezogen auf reines Polymer zugesetzt.

Ein weiterer Gegenstand der Erfindung ist die Herstellung der vernetzten Produkte in einem Eintopfverfahren. Hierbei werden die fetten Öle nach ihrer Epoxidierung mit geeigneten Persäuren wie Peressigsäure oder Perameisensäure durch Durchleiten von Gasen wie Luft oder Stickstoff in Gegenwart von 0,5 bis 5 Gew.-%, bezogen auf eingesetzten Ester, an basischen Oxiden, wie Calciumoxid, Magnesiumoxid oder geeigneten anderen säurebindenden Mitteln bei Temperaturen von 100 bis 120 °C entwässert. Überraschenderweise kann die Umsetzung mit den mehrfunktionellen Vernetzungsmitteln direkt angeschlossen werden, ohne dass es bei den vernetzten Produkten zu Qualitätseinbussen kommt. Der Gehalt an basischen Oxiden bzw. deren Neutralisationsprodukte mit den im Gemisch enthaltenen Säuren in den Polymeren stört bei vielen Anwendungen nicht.

Die erhaltenen flüssigen bis festen Polymere weisen eine günstigere thermische Stabilität als Schwefelfaktisse und Isocyanatfaktisse auf. Überraschenderweise wird beim Einsatz in Kautschukmischungen und gummitechnischen Prozessen ein ähnliches Eigenschaftsbild wie beim Einsatz von Schwefelfaktis beobachtet. Zusätzlich macht sich die höhere thermische Beständigkeit der erfindungsgemässen Produkte dadurch bemerkbar, dass sie im Salzbad auch bei 255 °C keine Veränderung zeigen.

Die Standfestigkeit unvulkanisierter, aus Kautschukmischung bestehender Rohlinge oder Folien ist beim Einsatz der erfindungsgemässen Produkte günstiger als beim Einsatz von Schwefelfaktis.

Für die Qualität von Vulkanisaten spielt der Druckverformungsrest eine grosse Rolle. Beim Einsatz in Elastomeren zeigten die erfindungsgemässen Produkte kleinere (günstigere) Werte als Vulkanisate, die Schwefelfaktis enthalten.

Die vorgenannten vorteilhaften Eigenschaften zeigen sich auch bei einer Peroxidvernetzung des Kautschuks, wo schwefelhaltige Produkte wegen des Geruches vermieden werden müssen.

Beim Einbringen der erfindungsgemässen Produkte in PVC ergibt sich nach dem Erhitzen von Folien auf Temperaturen um 200 °C eine überraschend gute Formbeständigkeit gegenüber Folien, die die erfingunsgemässen Produkte nicht enthalten. Dabei konnte gleichzeitig eine Verbesserung der Hitzestabilität erreicht werden.

Beispiel 1

500 g epoxidiertes Rüböl mit einem Epoxidgehalt von 4,5 Gew.-% werden unter Rühren auf 130 °C erwärmt. Dazu gibt man innerhalb von 15 Minuten portionsweise 50 g Bernsteinsäure. Nach 2 Stunden ist die Viskosität soweit angestiegen, dass die Mischung kaum noch rührbar ist. Man giesst in ein Blechgefäss ab und lässt die Masse 24 Stunden bei 130 °C im Wärmeschrank nachreagieren. Die erhaltene Masse wird zerkrümelt und kann in dieser Form in Elastomere und Polymere eingearbeitet werden.

Beispiel 2

500 g epoxidiertes Sojaöl mit einem Epoxidgehalt von 6 Gew.-% und 60 g Ethylendiamin werden unter Rühren auf 140 °C erwärmt. Nach 1 Stunde ist die Viskosität der Mischung soweit angestiegen, dass die Mischung nur noch schwer rührbar ist. Man giesst in ein geeignetes Gefäss ab und lässt im Wärmeschrank 18 Stunden bei 140 °C nachreagieren. Die erhaltene Masse kann leicht zerkrümelt oder zerkleinert werden und wird in dieser Form in Elastomere oder Polymere eingearbeitet.

Beispiel 3

Man erwärmt 4 kg Rüböl auf 50 °C und tropft unter Rühren und Kühlen innerhalb von 2 Stunden eine auf 0 bis 5 °C gekühlte Mischung aus 950 g 50%igen Wasserstoffperoxid, 50 g konzentrierte Phosphorsäure und 250 g Ameisensäure zu. Nach 5 Stunden erhitzt man auf 100 °C und leitet zur Unterstützung der Entwässerung durch das Reaktionsgemisch Stickstoff, wobei die Temperatur allmählich auf 120 °C gesteigert werden kann. Dann gibt man bei 130 °C innerhalb von 15 Minuten portionsweise 500 g Adipinsäure zu. Nach 2stündigem Rühren bei 130 °C ist die Viskosität soweit angestiegen, dass die Mischung kaum noch rührbar ist. Man giesst in ein Blechgefäss und lässt die Masse im Wärmeschrank 24 Stunden bei 130 °C nachreagieren. Die Masse wird zerkrümelt und kann in dieser Form in Elastomere und Polymere eingearbeitet werden.

Tabelle 1

| | Prüf-mischung | | (Gew.-Teile) |
|---|---|---|---|
| | 1 | 2 | 3 |
| SBR-Kautschuk | 50 | – | – |
| Naturkautschuk | 50 | – | – |
| EPDM-Kautschuk | – | 100 | 100 |
| Zn-oleat | 2 | – | – |
| Fettsäure/ Fettsäureester | – | 3 | 3 |
| ZnO | 5 | 5 | 5 |
| Russ N–550 | 50 | 60 | 100 |
| naphth. Mineralöl | – | 20 | 75 |
| Schwefel | – | 2 | – |
| Benzothiazyl-2-cyclo-hexylsulfenamid | 0,5 | – | – |
| Tetramethylthiuram-disulfid | 1,5 | – | – |
| Dicaprolactamdisulfid | 2,5 | – | – |
| Beschl.-Kombination CMT | – | 5 | – |
| Triallylcyanruat (70%) | – | – | 1 |
| Bis-(tertiärbutyl-per-oxiisopropyl)-benzol | – | – | 6 |

Anwendungsbeispiel

In einem Innenmischer wurden die in der Tabelle 1 angegebenen Agentien in üblicher Weise gemischt. Für die Prüfmischungen wurden ohne Zusatz (a), mit Zusatz von 10 Gew.-% Schwefel-Faktis (b) und 10 Gew.-% Produkt nach Beispiel 3 (c), jeweils bezogen auf die Kautschukmenge, die in der Tabelle 2 angegebenen Eigenschaften ermittelt.

Tabelle 2

| | a | b | c |
|---|---|---|---|
| **in Prüfmischung 1:** | | | |
| Spritzgeschwindigkeit (cm/min) | 128 | 137 | 147 |
| Spritzleistung (g/min) | 93 | 96 | 105 |
| Hitzestandfestigkeit bei 100 °C: | | | |
| (%) Deformation | | | |
| nach 5 min | 9 | 8 | 4 |
| nach 30 min | 11 | 9 | 5 |
| Vulkanisation 10 min/ 150 °C: | | | |
| Härte (ShA) | 64 | 63 | 64 |
| Zugfestigkeit (MPa) | 17,3 | 16,0 | 16,0 |
| Bruchdehnung (%) | 340 | 350 | 350 |
| Druckverformungsrest: | | | |
| 24 h/100 °C (%) | 16 | 29 | 16 |

| **in Prüfmischung 2:** | | | |
|---|---|---|---|
| Spritzgeschwindigkeit (cm/min) | 125 | 143 | 146 |
| Spritzleistung (g/min) | 103 | 114 | 115 |
| Hitzestandfestigkeit bei 100 °C: | | | |
| (%) Deformation | | | |
| nach 5 min | 9 | 8 | 4 |
| nach 30 min | 13 | 10 | 8 |
| Vulkanisation 10 min/ 160 °C: | | | |
| Härte (ShA) | 67 | 65 | 65 |
| Zugfestigkeit (MPa) | 10,3 | 9,1 | 9,1 |
| Bruchdehnung (%) | 270 | 280 | 330 |
| Druckverformungsrest: | | | |
| 24 h/120 °C (%) | 53 | 53 | 47 |

| **in Prüfmischung 3:** | | | |
|---|---|---|---|
| Spritzgeschwindigkeit (cm/min) | 138 | 154 | 163 |
| Spritzleistung (g/min) | 84 | 94 | 99 |
| Hitzestandfestigkeit bei 100 °C: | | | |
| (%) Deformation | | | |
| nach 5 min | 9 | 9 | 7 |
| nach 30 min | 18 | 12 | 9 |
| Vulkanisation 20 min/ 170 °C: | | | |
| Härte (ShA) | 48 | 44 | 47 |
| Zugfestigkeit (MPa) | 9,6 | 6,1 | 7,4 |
| Bruchdehnung (%) | 460 | 670 | 450 |
| Druckverformungsrest: | | | |
| 24 h/100 °C (%) | 11 | 24 | 9 |
| 24 h/150 °C (%) | 14 | 40 | 15 |

**Patentansprüche**

1. Verwendung epoxidierter und anschliessend mit Polycarbonsäuren, Polyaminen, Polyhydroxyverbindungen, Polythiolverbindungen und Verbindungen, die unterschiedliche Vernetzungsgruppen aus der Reihe Carboxy, Amino, Hydroxy und Thiol enthalten, vernetzter Ester aus mindestens zweiwertigen Alkoholen und ungesättigten Fettsäuren als Verarbeitungswirkstoffe für Polymere.

2. Verwendung epoxidierter und anschliessend mit Polycarbonsäuren, Polyaminen, Polyhydroxyverbindungen, Polythiolverbindungen und Verbindungen, die unterschiedliche Vernetzungsgruppen aus der Reihe Carboxy, Amino, Hydroxy und Thiol enthalten, vernetzter Ester aus mindestens zweiwertigen Alkoholen und ungesättigten Fettsäuren als Verarbeitungswirkstoffe für Elastomere.

3. Verwendung nach Ansprüchen 1 und 2, dadurch gekennzeichnet, dass man epoxidierte und anschliessende vernetzte natürliche Triglyceride ungesättigter Fettsäuren einsetzt.

4. Verwendung nach Ansprüchen 1 bis 3, dadurch gekennzeichnet, dass der Epoxidgehalt 1,5 bis 15 Gew.-% beträgt.

5. Verwendung nach Ansprüchen 1 bis 4, dadurch gekennzeichnet, dass man mit Dicarbonsäuren vernetzt.

6. Verwendung nach Ansprüchen 1 bis 5, dadurch gekennzeichnet, dass man die epoxidierten und anschliessend vernetzten Ester in Mengen von 3 bis 400 Gew.-%, bezogen auf reines Polymer den Polymeren zusetzt.

7. Verfahren zur Herstellung epoxidierter und anschliessend vernetzter Ester aus mindestens zweiwertigen Alkoholen und ungesättigten Fettsäuren, dadurch gekennzeichnet, dass man in einem Eintopfverfahren Ester aus mindestens zweiwertigen Alkoholen und ungesättigten Fettsäuren mit Persäuren epoxidiert, durch Durchleiten von Gasen in Gegenwart von 0,5 bis 5 Gew.-%, bezogen auf eingesetzten Ester, säurebindender Mittel, bei 100 bis 120 °C entwässert und mit Polycarbonsäuren, Polyaminen, Polyhydroxyverbindungen, Polythiolverbindungen und Verbindungen, die unterschiedliche Vernetzungsgruppen aus der Reihe Carboxy, Amino, Hydroxy und Thiol enthalten, umsetzt.

## Revendications

1. Utilisation d'esters époxydéset réticulés ensuite avec des acides polycarboxyliques, des polyamines, des composés polyhydroxylés, des composés de polythiols et des composés qui contiennent différents groupes de réticulation compris dans la série des carboxy, des amino, des hydroxy et des thiols, ces esters provenant d'alcools qui sont au moins des dialcools et d'acides gras non saturés, en tant qu'adjuvants de fabrication pour les polymères.

2. Utilisation d'esters époxydés et réticulés ensuite avec des acides polycarboxyliques, des polyamines, des composés polyhydroxylés, des composés de polythiols et des composés qui contiennent différents groupes de réticulation compris dans la série des carboxy, des amino, des hydroxy et des thiols, ces esters provenant d'alcools qui sont au moins des dialcools et d'acides gras non saturés, comme adjuvants de fabrication des élastomères.

3. Utilisation selon les revendications 1 et 2, caractérisée en ce que l'on utilise des triglycérides naturels époxydés et réticulés ensuite provenant d'acides gras non saturés.

4. Utilisation selon les revendications 1 à 3, caractérisée en ce que la teneur en époxyde est de 1,5 à 15% en poids.

5. Utilisation selon les revendications 1 à 4, caractérisée en ce que l'on effectue la réticulation avec des acides dicarboxyliques.

6. Utilisation selon les revendications 1 à 5, caractérisée en ce que l'on ajoute aux polymères les esters époxydés et réticulés ensuite en quantités de 3 à 400% en poids rapporté au polymère pur.

7. Procédé de fabrication d'esters époxydés et réticulés ensuite provenant d'alcools qui sont au moins des dialcools et d'acides gras non saturés, caractérisé en ce que l'on effectue dans un seul récipient l'époxydation des esters provenant d'alcools qui sont au moins des dialcools et d'acides gras non saturés au moyen de peracides, qu'on les déshydrate par insufflation de gaz, en présence de 0,5 à 5% en poids, rapporté à l'ester mis en œuvre, de produits fixant les acides à une température de 100 à 120 °C et que l'on effectue la conversion avec des acides polycarboxyliques, des polyamines, des composés polyhydroxylés, des composés de polythiols et des composés qui contiennent différents groupes de réticulation dans la série des carboxy, des amino, des hydroxy et des thiols.

## Claims

1. Use of esters of at least dihydric alcohols and unsaturated fatty acids, which esters have been epoxidised and then cross-linked with polycarboxylic acids, polyamines, polyhydroxyl compounds, polythiol compounds and compounds containing differing cross-linking groups from the series comprising carboxyl, amino, hydroxyl and thiol, as processing agents for polymers.

2. Use of esters of at least dihydric alcohols and unsaturated fatty acids, which esters have been epoxidised and then cross-linked with polycarboxylic acids, polyamines, polyhydroxyl compounds, polythiol compounds and compounds containing differing cross-linking groups from the series comprising carboxyl, amino, hydroxyl and thiol, as processing agents for elastomers.

3. Use according to Claims 1 and 2, characterised in that epoxidised and subsequently cross-linked natural triglycerides of unsaturated fatty acids are used.

4. Use according to Claims 1 to 3, characterised in that the epoxide content is 1.5 to 15% by weight.

5. Use according to Claims 1 to 4, characterised in that dicarboxylic acids are used for the cross-linking.

6. Use according to Claims 1 to 5, characterised in that the epoxidised and subsequently cross-linked esters are added to the polymers in quantities of 3 to 400% by weight, based on the pure polymer.

7. Process for the preparation of epoxidised and subsequently cross-linked esters of at least dihydric alcohols and unsaturated fatty acids, characterised in that, in a one pot process, esters of at least dihydric alcohols and unsaturated fatty acids are epoxidised with peracids, dehydrated at 100 to 120 °C by passing through gases in the presence of 0.5 to 5% by weight, based on the ester used, of acid-binding agents and reacted with polycarboxylic acids, polyamines, polyhydroxyl compounds, polythiol compounds and compounds containing differing cross-linking groups from the series comprising carboxyl, amino, hydroxyl and thiol.